Europäisches Patentamt

European Patent Office

Office européen des brevets

(19)

(11) Veröffentlichungsnummer: **0 116 181**

A1

(12) ## EUROPÄISCHE PATENTANMELDUNG

(21) Anmeldenummer: 83200234.9

(22) Anmeldetag: 15.02.83

(51) Int. Cl.³: **E 21 B 43/08**
E 03 B 3/18, E 02 B 11/00
B 01 D 29/22, B 01 D 25/16

(43) Veröffentlichungstag der Anmeldung:
22.08.84 Patentblatt 84/34

(84) Benannte Vertragsstaaten:
AT BE CH DE FR GB IT LI LU SE

(71) Anmelder: Techn. Buro Boode B.V.
P.O. Box 27
NL-2760 AA Zevenhuizen(NL)

(72) Erfinder: Boode, J. M.
Eendrachtsdijk 1
NL-2761 AS Zevenhuizen Z.H.(NL)

(54) **Filterrohr.**

(57) Filterrohr für Brunnen, welches vorteilhaft aus Kunststoff besteht und mit gesägten Filterschlitzen (4) versehen ist, wobei das Filterrohr (1) an der Innenwand mit Verstärkungsrippen (3) versehen ist, welche nicht durchgesägt werden.

Fig 1

EP 0 116 181 A1

Filterrohr.

Die Erfindung bezieht sich auf ein Filterrohr für Brunnen, zum Entwässern von Gelände, und speziell auf ein Filterrohr aus Kunststoff.

Entsprechende Filterrohre sind bekannt und sie finden vielfach Verwendung zum bekleiden von Brunnen. Damit das Wasser aus der Erde in das Rohr einfliessen kann, ist der Rohrmantel durchlöchert. Die Rohre können aus Metall, z.B. rostfreiem Stahl, aus Beton oder Kunststoff u. dgl. hergestellt sein.

Die Öffnungen oder Filterschlitze am Rohr, welche in Längs- oder Querrichtung angebracht sein können, werden allgemein durch Sägen erzeugt, wobei das Rohr nach einem bekannten Verfahren hergestellt ist.

Da sehr viele feine Schlitze über die ganze Rohroberfläche hin gesägt werden müssen, ist diese Methode sehr aufwendig.

Weiterhin sind Rohre aus Metallprofilen bekannt, welche in Längsrichtung am Rohrumfang angeordnet sind. Um diese Profile wird dann ein Metallband gewickelt und auf diese Weise entsteht ein Rohr, welches mit einem spiralförmigen Schlitz versehen ist (Niederl. Patentschrift 43.319). Die Herstellung dieser Rohre verlangt sehr viel äusserst präzise Schweissarbeit, da die Öffnungen in Filterrohren für Trinkwasser sehr fein (0,01 cm) und sehr gleichmässig sein müssen.

Die amerikanische Patentschrift 1.546.528 beschreibt ein Filterrohr, welches aussen mit Verstärkungsrippen versehen ist. Die Filterschlitze werden von innen gesägt, und es ist selbstverständlich, dass bei grossen Längen, fertigungstechnische Probleme auftreten.

Die amerikanische Patentschrift 1.963.629 bezieht sich auf ein Filterrohr, mit gefalzten Verstärkungen, welche axial verlaufen. Wenn diese Verstärkungen nach innen gerichtet sind, können die Filterschlitze von aussen gesägt werden, jedoch können Schraubverbindungen mittels Muffen praktisch nicht stattfinden. Ausserdem wird die aktive Filteroberfläche stark negatif beeinflusst.

Die Aufgabe der Erfindung besteht darin, auf wirtschaftliche Weise ein Filterrohr herzustellen, dessen Öffnungen jede gewünschte Dimension haben können und ausserdem sehr gleichmässig sind, wobei die aktive Filteroberfläche optimal ist.

Weiterhin besteht die Aufgabe der Erfindung darin, ein Filterrohr zu erhalten, welches an beiden Enden problemlos mit einem Gewinde versehen werden kann um auf diese Weise die Filterrohr mittels einer Muffe mit einander zu verbinden, ohne dass der Rohrdurchmesser oder die Festigkeit vermindert werden.

Erfindungsgemäss wird diese Aufgabe dadurch gelöst, dass mittels einer Schneckenpresse ein Kunststoffrohr extrudiert wird welches an der Innenwand mit Verstärkungsrippen versehen ist, die in Längsrichtung verlaufen. Als folgender Arbeitsgang wird mittels einer Sägevorrichtung ein Kontinuierlicher, spiralförmiger Schlitz über die gesamte Rohrlänge gesägt, wobei die Sägetiefe so gewählt wird, dass allein der Rohrmantel, und nicht die Verstärkungsrippen durchgesägt werden.
Die Breite der auf diese Weise erzeugten Schlitze des Filterrohres ist sehr Konstant. Die Wandstärke des Rohres und der Querschnitt der Verstärkungsrippen können leicht an die gewünschten Festigkeitswerte angepasst werden.
Natürlich können mehrere Sägen parallel geschaltet sein um auf diese Weise gleichzeitig mehrere Schlitze zu sägen, deren Form durch das Profil des einzelnen Sägeblattes bestimmt werden kann.
Ausserdem ist es möglich, parallele anstatt der sprialförmigen Schlitze zu sägen.

Die Erfindung soll nun durch Zeichnungen veranschaulicht werden.
Fig. 1 zeigt ein Filterrohr mit Verstärkungsrippen und spiralförmig angeordnetten Filterschlitzen.
Fig. 2 zeigt einen Querschnitt der Fig. 1 nach Linie AA[1].

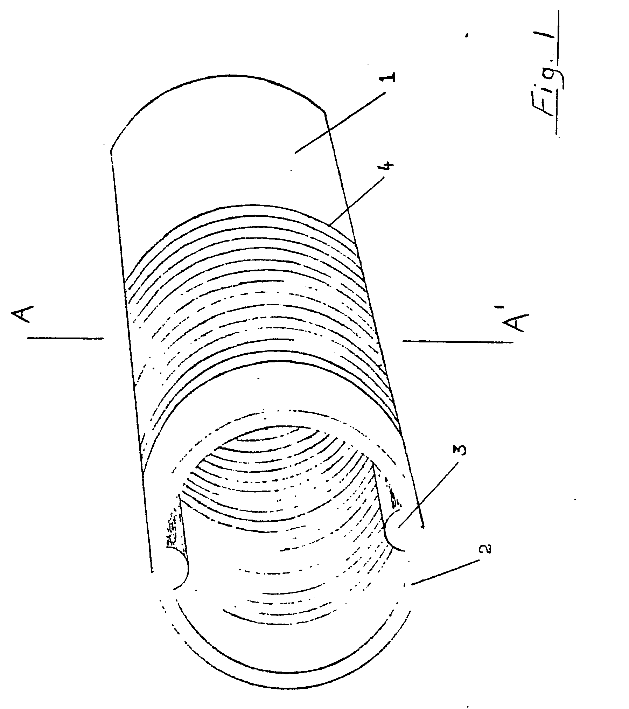

Gemäss Fig. 1 ist das Filterrohr 1, dessen Mantel mit 2 gekennzeichnet ist, an der Innenwand mit den Verstärkungsrippen 3 versehen. Die Filterschlitze 4 werden in das Rohr 1 gesägt.

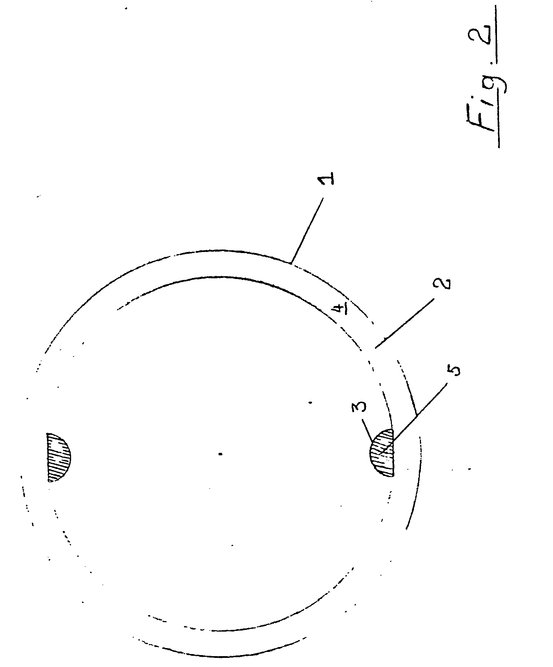

In Fig. 2 trägt der Filterschlitz die Kennzahl 4 . Die Sägetiefe wird so gewählt, dass der Mantel 2 durchgesägt wird, jedoch nicht die Rippen 3.

Erfindungsgemäss kann das Ende 6 (Fig. 1) problemlos mit einem Gewinde für eine Muffenverbindung versehen werden. Beim Schneiden des Gewindes an der Innenwand werden die Verstärkungsrippen automatisch entfernt.

Durch die Schraubverbindung wird das Rohr an dieser Stelle nicht geschwächt und der Verlust an aktiver Filteroberfläche wird auf ein Minimum reduziert.

Es ist leicht verständlich, dass erfindungsgemäss, das Rohr sowohl innen als auch aussen mit einem Gewinde versehen werden kann.

PATENTANSPRÜCHE

1. Filterrohr für Brunnen und zum Entwässern von Gelände, vorteilhaft bestehend aus Kunststoff, mit Filterschlitzen (4), dadurch gekennzeichnet, dass das Filterrohr (1) an der Innenwand mit axialen Verstärkungsrippen (3) versehen ist, wobei die Filterschlitze (4) allein in den Mantel (2) des Filterrohres gesägt sind.

2. Filterrohr gemäss des Patentanspruches 1, dadurch gekennzeichnet, dass das Ende (6) des Filterrohr (1) an seiner Innenwand mit einem Gewinde versehen ist.

3. Filterrohr gemäss des Patentanspruches 1, dadurch gekennzeichnet, dass das Filterrohr (1) am Ende (6) aussen mit einem Gewinde versehen ist.

0116181

*Fig. 1*

0116181

Fig. 2

1

2

4

5

3

Europäisches
Patentamt

EUROPÄISCHER RECHERCHENBERICHT

0116181
Nummer der Anmeldung

EP 83 20 0234

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,D | US-A-1 963 629 (MARK) <br> * Insgesamt * | 1,3 | E 21 B 43/08 <br> E 03 B 3/18 <br> E 02 B 11/00 <br> B 01 D 29/22 <br> B 01 D 25/16 |
| | --- | | |
| Y | DE-A-1 808 271 (NISHIKAWA) <br> * Seite 7, letzter Absatz - Seite 8; Figuren 10-12 * | 1 | |
| | --- | | |
| A,D | US-A-1 546 528 (WESTPHAL) <br> * Insgesamt * | 1 | |
| | --- | | |
| A | BE-A- 652 788 (LARGE) <br> * Insgesamt * | 1 | |
| | --- | | |
| A | US-A-4 365 669 (WAGNER) <br> * Spalte 2, Zeilen 52-68 * | 2,3 | |
| | --- | | RECHERCHIERTE SACHGEBIETE (Int. Cl. ³) |
| A | DE-B-1 194 335 (KLEINDIENST) | | |
| | --- | | E 21 B <br> E 03 B <br> E 02 B <br> B 01 D <br> E 02 D <br> F 16 L |
| E | NL-A-8 103 457 (BOODE) <br> * Insgesamt * | 1 | |
| | ----- | | |

Der vorliegende Recherchenbericht wurde für alle Patentansprüche erstellt.

| Recherchenort <br> DEN HAAG | Abschlußdatum der Recherche <br> 19-10-1983 | Prüfer <br> PAUCNIK B. |
|---|---|---|